# EUROPEAN PATENT APPLICATION

(11) **EP 1 980 543 A2**
(43) Date of publication of application: **15.10.2008**
(21) Application number: 08154425.6
(22) Date of filing: 11.04.2008
(51) Int. Cl.: C04B 26/18, C04B 18/16, C04B 41/63

(54) **Method for consolidating blocks or slabs made of a building material**

(30) Priority: 12.04.2007 IT VR20070054
(71) Applicant: Aros S.r.l., 37010 Affi (VR) (IT)
(72) Inventor: Fioratti, Stefano, 25015 Brescia (IT); Catel, Guglielmo, 22070 Como (IT); Ferrario, Ruggero, 20083 Milano (IT); Testa, Giuseppe, 20090 Milano (IT)
(74) Representative: Reniero, Cirillo Silvano

(57) **Abstract**

The present invention relates to a method of consolidation of blocks or slabs made of a building material, which comprises the steps of:
- providing offcuts of blocks or slabs of a building material;
- adding and mixing the offcuts with a resin-based composition to obtain a mixture thereof; and
- applying the mixture thus obtained to one or more faces of a slab or block made of the same building material.

## Description

The present invention relates to a method of consolidation and stuccoing of blocks and slabs made of a building material, such as stone material, porcelainized gres, and resin-quartz, resin-granite, resin-marble, resin-cement, cement-quartz, cement-granite, cement-marble agglomerates, and the like.

Slabs or blocks of some building materials, as it is known, before undergoing working steps, e. g. a cutting step, are strengthened by being coated with one or more layers of a resin material or by being stuccoed (travertines), in order to avoid or to reduce the risk of crack or rift formation in the material that would otherwise substantially affect the slab or block resistance to working stress due to machining operations to which the slab or block is subjected.

A first method of applying a resin material onto a slab or block comprises the step of spraying or spreading by means of a spatula synthetic resins preferably filled with an inert material (e. g. CaCO₃, Talc, Silica, Quartz) onto the block or slab, in order to obtain a coating layer termed "frame". Through such a method, however, the maximum coating thickness thus obtained is rather small, the cost of the resin is relatively high, and difficulties are also met in obtaining a rapidly-hardening mixture. Thus, the coating film obtained after hardening of the applied hardenable mixture, is often only partly polymerised, and is thus unsuitable for ensuring an effective function of protection. Moreover, the coating film contaminates the cooling liquids (water) used during the subsequent cutting step of the slab or block.

In order to coat a slab or block with a uniform layer of resin, the slab or block is placed in a container, the walls of which are provided with inner spacer elements. Resin is then poured into the air space between the slab or block and the container.

Moreover, as it is also known, as a result of working processing "mud" is produced that mainly comprises a mixture of offcuts or granules of cut materials and water which is supplied, as mentioned above, to the slabs or blocks being cut in order to cool the cutting tools.

Of course, in order to dispose of the processing mud qualified staff and rather expensive machineries are required.

It has already been proposed to recover the processing mud and to use it in mixture with one or more filling components in order to obtain stone materials. However, many difficulties have been faced in the exploitation of such methods, and specifically in obtaining materials with good stability and adhesion features.

The main object of the present invention is then to provide a method of consolidating and stuccoing slabs or blocks of a stone material, such method being suitable for the production of highly resistant slabs or blocks.

Another object of the present invention is to provide a method of consolidating slabs or blocks, which can be carried out in a simple an economical manner.

Another object of the present invention is to provide a method of recovering wastes or processing mud produced during processing or working, e. g. cutting, squaring off, polishing, etc. of stone materials that does not require complicated procedures to be followed or the use of expensive equipment.

These and still other objects, which will become better apparent below, are achieved by method of consolidating blocks or slabs made of a building material, which comprises the steps of recovering processing waste from working operations of blocks or slabs of a building material; mixing the waste with a resin-based composition to obtain a slurry; and applying the slurry thus obtained to the surface or surfaces of a slab or block of a building material.

Thus, according to the present invention, processing waste or mud of blocks or slabs made of a building material, i. e. the waste produced upon working blocks or slabs, is collected and stored, e. g. in a screw or vane mixer, to which a resin-based composition is supplied, thereby obtaining a slurry. If desired, the processing waste of larger dimensions can be crushed by means of one or more crushers, e. g. jaw crushers, or stone mills of any suitable type.

The slurry thus obtained is applied, e. g. by means of a screw conveyor, or if the waste has been crushed or milled through one or more spray guns, onto a surface or surfaces of a slab or block to be consolidated. The spry gun(s) can be fed by a pneumatically operated pump, e. g. a pump model VARIMIX AIRLESS MC obtainable from Wagner*Colora* srl at Burago Molgora (Milan - Italy).

Depending upon the working conditions, one or more activators selected from the group comprising peroxides, hardeners, reaction promoters, accelerating agents, surfactants, reactive monomers and hydrophilic components can be added to the slurry in order to optimize hardening and binding features of the resin-based composition.

The amount of resin-based composition according to the present invention ranges from about 10 and about 90% by weight.
Preferably, a resin-based composition useful for being used in the present invention can be selected from the group comprising unsaturated esters or polyesters in mixture with unsaturated monomers suitably modified so as to be hydro-compatible. Thus, the resin-based composition is compatible with mud humidity, i. e. it is provided with hydrophilic features, so that the mixture has mechanical and rheological features and a satisfactory polymerisation reaction rate despite the presence of water therein.

A building material that can be consolidated in accordance with the present invention comprises stone materials, porcelain gres, resin-quartz, resin-granite, resin-marble, resin-cement, cement-quartz, cement-granite, cement marble agglomerates and the like.

Examples of carrying out the method according to the present invention are set forth hereinbelow.

### Example 1

A polyester resin sold by Dagos s.r.l. at Parabiano, Milan - Italy under the trade name DAGOPOL MA332 PAV, and comprising a hybrid resin consisting of modified unsaturated polyester in mixture with a hydro-compatible styrene-free mixture of unsaturated reactive monomers, was added to filter-pressed mud obtained from a processing water collection plant, in a 2:3 resin/mud ratio by weight, and collected in a Viscoget mixer obtained from SIMPEX Tech AG at Pioltello (Milan - Italy).

The mixture was stirred in the mixer until the composition become homogeneous. Then, 2% by weight of peroxide, i. e. an organic radical generator, was added to the mixture and the resulting slurry was used as a mastic for consolidating and stuccoing of marble and granite blocks. After hardening the resin-based composition showed characteristic features that compared well with those of a conventional mastic of good quality.

### Example 2

Polyester resin DAGOPOL MA 332 PAV was added to a filter-pressed mud in a 2:3 resin/mud ratio by weight, thereby obtaining a component A, whereas a component B comprising a polymerisation catalyser sold by Tenax Spa at Volargne, Verona - Italy under the trade name of Catalizzatore SA.

Components A and B were thoroughly mixed together in a 1:1 and 92:8 ratios by weight supplied to a spry gun for being applied as a mastic for successfully consolidating marble and granite blocks.

With a method according to the present invention, processing mud or waste can be recovered and used again as a consolidating product suitable for giving cohesion and mechanical strength features to blocks or slabs of stone materials.

The method as described above is susceptible to numerous modifications and variations within the protection scope as defined by the claims.

## Claims

1. A method for consolidating blocks or slabs made of a building material, which comprises the steps of:
- recovering processing waste from working operations of blocks or slabs of a building material;
- mixing the waste with a resin-based composition to obtain a slurry; and
- applying the slurry thus obtained to the surface or surfaces of a slab or block of a building material.

2. A method as claimed in claim 1, **characterized in that** said resin-based composition comprises at least one component selected from the group including unsaturated esters and polyester in mixture with unsaturated monomers.

3. A method as claimed in claim 1 or 2, **characterized in that** said mixture comprises between about 10 and about 90% by weight of said resin-based composition.

4. A method as claimed in any claim 1 to 3, **characterized in that** it comprises adding at least one polymerisation activator selected from the group comprising peroxides, hardeners, reaction promoters, accelerating agents, surfactants, reactive monomers and hydrophilic components either to said waste or to said resin-based composition.

5. A method as claimed in any previous claim, **characterized in that** said processing waste and said resin-based composition are mixed in mixer.

6. A method as claimed in claim 5, **characterized in that** said processing waste is supplied to said mixer by means of a screw or vane conveyor.

7. A method as claimed in claim 5 or 6, **characterized in that** said resin-based composition is supplied to said mixer by a crushing apparatus.

8. A method as claimed in claim 5 or 6, **characterized in that** said resin-based composition is applied to a block or slab to be consolidated by means of a pray gun.
